# EUROPEAN PATENT APPLICATION

(11) **EP 4 279 149 A1**
(43) Date of publication of application: **22.11.2023**
(21) Application number: 23173444.3
(22) Date of filing: 15.05.2023
(51) Int. Cl.: A62C 13/62, A62C 13/78, A62C 37/50

(54) **A FIRE EXTINGUISHER, A SYSTEM FOR MONITORING A FIRE EXTINGUISHER, AND METHODS FOR DETECTING LEAKAGE FROM A FIRE EXTINGUISHER**

(30) Priority: 16.05.2022 SE 2250583
(71) Applicant: Dafo Brand AB, 135 26 Tyresö (SE); Cosesy A/S, 8240 Risskov (DK)
(72) Inventor: JUUL WINTHER, René, 8250 Egå (DK)
(74) Representative: Keijser Bergöö, Malin Katarina

(57) **Abstract**

The technology disclosed relates to a fire extinguisher, a monitoring system and methods for detecting leakage and/or determining whether leakage from the cylinder of a fire extinguisher has occurred. In particular, the technology disclosed relates to a fire extinguisher, a monitoring system and methods for determining whether leakage from the cylinder of a fire extinguisher has occurred by compensating for how the rate of surrounding temperature variations affects weight measurement readings obtained from a load cell of the fire extinguisher. In embodiments, the technology disclosed relates to a fire extinguisher, a monitoring system and methods for filtering weight measurement data obtained from a load cell of a fire extinguisher.

## Description

### TECHNICAL FIELD

The technology disclosed relates to a fire extinguisher, a monitoring system and methods for detecting leakage and/or determining whether leakage from the cylinder of a fire extinguisher has occurred. In particular, the technology disclosed relates to a fire extinguisher, a monitoring system and methods for determining whether leakage from the cylinder of a fire extinguisher has occurred by compensating for how the rate of surrounding temperature variations affects weight measurement readings obtained from a load cell of the fire extinguisher. In embodiments, the technology disclosed relates to a fire extinguisher, a monitoring system and methods for filtering weight measurement data from a load cell of a fire extinguisher by removing weight measurement data and/or by applying weight factors to the weight measurement data obtained from the load cell.

### BACKGROUND

Fire extinguishers are stationed for use in case of a fire in all manner of environments. Typically, the fire extinguishers are placed in standby condition at a system of fire extinguisher stations found throughout a facility at locations selected for reasonably easy access in a fire emergency.

Typically, the inspections of fire extinguishers are performed manually, and inspection of fire extinguishers at a system of fire extinguisher stations located throughout a facility, e.g., such as a manufacturing plant or an office complex, or throughout an institution, e.g., such as a school campus or a hospital, may occupy one or more employees on a full-time basis. Procedures for more frequent inspections are generally considered cost prohibitive, even where it is recognized that a problem of numbers of missing or non-functioning fire extinguishers may not be addressed for days or even weeks at a time, even where manpower may otherwise be available.

US 5 848 651 discloses a portable fire extinguisher assembly including a fire extinguisher with a tank containing fire extinguishing material, a valve for metering release of the fire extinguishing material, and a gauge displaying pressure within the tank as well as a docking station in communication with the fire extinguisher. An electronic circuit in communication with the fire extinguisher and the docking station issues a signal upon detection of predetermined conditions, including at least one predetermined internal condition and at least one predetermined external condition. The fire extinguisher electronic circuit includes cooperative male and female electrical/communication connection elements defined by the fire extinguisher and the docking station.

US2021364130 describes a system for a determining a status of a gas cylinder where the status may be the leaking status. The system comprises a load sensor for detecting the weight of a plurality of gas cylinders and a temperature sensor for detecting a temperature local to the plurality of cylinders. A processing unit is configured to determine the status of the plurality of gas cylinders based on received weight and temperature signals. The processing unit may optionally comprise a machine learning model or deep learning model. The self-learning and adaptive machine learning technique of the processing unit use the most up to date information and knowledge about the parameters to estimate the status of the gas cylinder.

US2020/0226916 describes a method for determining a leakage from a fire extinguisher by recording load cell data with temperature as a reference and comparing collected data with the reference data with a temperature compensation. This method is limited to determining a leakage if the difference between collected data and the load cell data with temperature as a reference exceeds 0.5%, i.e. weight changes above 50 grams per 10.000 grams.

### PROBLEMS WITH THE PRIOR ART

The inspections of fire extinguishers are generally considered cost prohibitive, even where it is recognized that a problem of numbers of missing or non-functioning fire extinguishers may not be addressed for days or even weeks at a time, even where manpower may otherwise be available. It is therefore important to provide accurate weight measurement data and reduce the risk of false positives when determining whether a leakage from the cylinder of the fire extinguisher has occurred.

Monitoring of small weight changes can be influenced by different factors, such as the rate of temperature changes and vibrations causing variations for a period or for settling the physical properties of the steel bar in load cells. However, larger weight changes per time unit are typically not significantly influenced by smaller temperature changes or vibrations. For large vibrations and bumps, the control system will typically be reset and needs to learn again, for example if the weight changes are significant or if the fire extinguisher is dismounted and then mounted again.

Smaller weight changes that shift the absolute weight permanently to a new level, may be indications of events to record and needs to be investigated to avoid false positives when determining whether leakage from the cylinder has occurred. These weight changes may also be caused by other factors than leakage, e.g., birds making nest, a stolen hose or safety pin, etc. The cause of smaller weight changes may thus need to be identified by the control system of the monitoring system before determining whether a leakage, which would produce many false positives and unwanted manual inspections of fire extinguishers.

The prior art solutions for detecting leakage from a fire extinguisher may only be used for detecting larger weight changes such as changes above 50 grams per 10.000 grams. That is not precise enough to detect leaking propellant (often nitrogen gas) from the cylinder of the fire extinguisher. If all nitrogen gets out of a bottle, then it can be down to 25 grams of a 10 kg fire extinguisher. When the propellant has leaked out of the bottle, then the fire extinguisher will not work. The use of a fixed threshold value for determining whether there is leakage from a fire extinguisher without compensating for the individual load cell or using more advanced filtering or compensations for external factors will lead to a high rate of false positives when determining whether there is leakage from the fire extinguisher.

Thus, by simply using a fixed threshold value of 0.5% for the difference between pre-collected data and the load cell data when determining whether there is leakage from a fire extinguisher will lead to a high rate of false positives. Furthermore, the prior art does not provide solutions for detecting very small leakage of propellant such as nitrogen gas from the cylinder of the fire extinguisher. 3-7 grams nitrogen loss is typically enough to damage the function of the fire extinguisher, but the loss will continue, until most is out of the cylinder, which amounts to 25-50 grams before reaching atmospheric pressure (0.1Mpa/1bar).

### SUMMARY

The technology disclosed introduces the use of more advanced temperature compensation and filtering of weight measurement data enabling improved identification of the cause of weight changes before determining whether a leakage has occurred, thereby providing more accurate weight measurement data and reducing the risk of false positives.

In various aspects, the technology disclosed allows for the detection of very small weight changes using more advanced compensation of weight measurement data and by identifying periods of large variances in temperature and/or vibrations based on reference statistical data yet allows for a reduced risk of false positives when determining whether a leakage has occurred. According to aspects of the technology disclosed, the identification of the cause of weight changes may be further improved by the filtering of data samples collected during periods of large variances in temperature and/or vibrations.

In aspects, the technology disclosed is also directed at the concept of distribution of work and to enable more intelligent data processing by applying weighting factors and/or local filtering of measurement data obtained by the individual load cell during periods of large variances in temperature and/or vibrations, e.g. before transmitting the obtained measurement data to the cloud for further processing, thereby reducing the risk of false positives and saving battery. The local filtering of samples, which may include at least one of discarding of measurement data and applying weighting factors to the measurement data, may be based on a determined rate of temperature variations and/or vibrations during the period that the samples were collected.

The technology disclosed relates to a monitoring system for detecting leakage from a gas cylinder of a fire extinguisher. The monitoring system comprises a load cell for measuring the weight of a unit comprising the gas cylinder. The monitoring system of the technology disclosed further comprises at least one temperature sensor for detecting surrounding temperature and a control system configured to collect surrounding temperature data from the at least one temperature sensor and compensate the weight measurement readings obtained from the load cell at least partly based on the rate of surrounding temperature variations during the weight measurements readings, thereby reducing the risk of false positives when determining whether a leakage from the gas cylinder of the fire extinguisher has occurred.

In aspects, the technology disclosed relates to a monitoring system for detecting leakage from a fire extinguisher comprising a gas cylinder for containing gas and a load cell for measuring the weight of a unit comprising the cylinder, where the monitoring system further comprises at least one temperature sensor for detecting surrounding temperature and a control system configured to collect surrounding temperature data from the at least one temperature sensor and compensate the weight measurement readings obtained from the load cell at least partly based on the rate of surrounding temperature variations during the weight measurements readings.

In aspects, the technology disclosed relates to a monitoring system for detecting leakage from a fire extinguisher comprising a gas cylinder for containing gas and a load cell for measuring the weight of a unit comprising the cylinder, where the monitoring system further comprises at least one temperature sensor for detecting surrounding temperature and a control system configured to collect surrounding temperature data from the at least one temperature sensor and filter the weight measurement readings obtained from the load cell at least partly based on the surrounding temperature variations during the weight measurements readings. The filtered weight measurement readings may then be used for determining, by the control system, where a leakage from the fire extinguisher has occurred.

In aspects, the technology disclosed relates to a monitoring system for detecting leakage from a fire extinguisher comprising a gas cylinder for containing gas and a load cell for measuring the weight of a unit comprising the cylinder, the monitoring system further comprises at least one temperature sensor for detecting surrounding temperature and a control system configured to collect surrounding temperature data from the at least one temperature sensor, at least one of compensate and filter the weight measurement readings obtained from the load cell at least partly based on the rate of surrounding temperature variations during the weight measurements readings, and determine whether a leakage has occurred based on the compensated weight measurement readings, wherein the control system is configured to at least one of compensate and filter the weight measurement readings by at least one of removing or discarding weight measurement data samples obtained from the load cell during periods of relatively large variances of surrounding temperature and applying weighting factors to the weight measurement data samples.

In aspects, the technology disclosed relates to a monitoring system for detecting leakage from a fire extinguisher comprising a gas cylinder for containing gas and a load cell for measuring the weight of a unit comprising the cylinder, where the monitoring system further comprises at least one temperature sensor for detecting surrounding temperature and a control system comprising a local control unit located at the site of the fire extinguisher and that is configured to collect surrounding temperature data from the at least one temperature sensor and filter the weight measurement readings obtained from the load cell at least partly based on the surrounding temperature variations during the weight measurements readings. The filtered weight measurement readings may then be used for determining, by the control system, for example the local control unit or a remote computer unit in the cloud, whether a leakage from the fire extinguisher has occurred.

In aspects, the technology disclosed relates to a monitoring system for detecting leakage from a fire extinguisher comprising a gas cylinder for containing gas and a load cell for measuring the weight of a unit comprising the cylinder, where the monitoring system further comprises at least one temperature sensor for detecting surrounding temperature and a control system comprising a remote computer unit configured to receive, from a local control unit located at the site of the fire extinguisher, collected surrounding temperature data from the at least one temperature sensor and then filter the weight measurement readings received from the local control unit, at least partly based on the surrounding temperature variations during the weight measurements readings. The filtered weight measurement readings may then be used for determining, by the control system, for example the local control unit or a remote computer unit in the cloud, whether a leakage from the fire extinguisher has occurred.

In aspects, the technology disclosed relates to a monitoring system for detecting leakage from a fire extinguisher comprising a gas cylinder for containing gas and a load cell for measuring the weight of a unit comprising the cylinder, the monitoring system further comprises at least one temperature sensor for detecting surrounding temperature and a control system configured to collect surrounding temperature data from the at least one temperature sensor and filter or compensate the weight measurement readings obtained from the load cell at least partly based on the rate of surrounding temperature variations during the weight measurements readings, where the filtering or compensating the weight measurement readings include at least one of removing or discarding weight measurement data samples obtained from the load cell during periods of relatively large variances of surrounding temperature and applying weighting factors to the weight measurement data samples. Data samples obtained during periods of small variances of surrounding temperature are then typically given a greater importance for determining whether leakage from the cylinder has occurred than data samples obtained during periods of large variances of surrounding temperature.

In aspects, the technology disclosed relates to a monitoring system for detecting leakage from a fire extinguisher comprising a gas cylinder for containing gas and a load cell for measuring the weight of a unit comprising the cylinder. The monitoring system may then further comprise at least one temperature sensor for detecting surrounding temperature and a control system configured to collect surrounding temperature data from the at least one temperature sensor and compensate the weight measurement readings obtained from the load cell at least partly by filtering the weight measurement readings based on temperature variations during the weight measurements readings that have been determined by the control system based on the surrounding temperature detected by the at least on temperature sensor.

In aspects, the technology disclosed relates to a monitoring system for detecting leakage from a fire extinguisher comprising a gas cylinder for containing gas and a load cell for measuring the weight of a unit comprising the cylinder. The monitoring system may then further comprise at least one temperature sensor for detecting surrounding temperature and a control system configured to collect surrounding temperature data from the at least one temperature sensor and compensate the weight measurement readings obtained from the load cell at least partly by filtering the weight measurement readings based on the rate of surrounding temperature variations during the weight measurements readings.

In aspects, the technology disclosed relates to a monitoring system for detecting leakage from a fire extinguisher comprising a gas cylinder for containing gas and a load cell for measuring the weight of a unit comprising the cylinder. The monitoring system may then further comprise at least one temperature sensor for detecting surrounding temperature and a control system configured to collect surrounding temperature data from the at least one temperature sensor and compensate the weight measurement readings obtained from the load cell at least partly by filtering the weight measurement readings based on temperature variations during the weight measurements readings that have been determined by the control system based on temperature data indicative of the surrounding temperature detected by the at least on temperature sensor. In embodiments, a local control unit of the control system may then be configured to reduce the risk of false positives by filtering weight measurement data obtained during periods of relatively large variances of surrounding temperature before transmitting the weight measurement data to a remote computer unit, for example in the cloud, for further processing.

In aspects, the technology disclosed relates to a monitoring system for detecting leakage from a fire extinguisher comprising a gas cylinder for containing gas and a load cell for measuring the weight of a unit comprising the cylinder. The monitoring system may then further comprise at least one temperature sensor for detecting surrounding temperature and a control system comprising a local control unit configured to collect surrounding temperature data from the at least one temperature sensor and compensate the weight measurement readings obtained from the load cell at least partly by filtering the weight measurement readings based on temperature variations during the weight measurements readings. The temperature variations are determined by the control system based on temperature data indicative of the surrounding temperature detected by the at least on temperature sensor. The fire extinguisher may then comprise a local control unit configured to receive/obtain weight measurement readings and the temperature data detected by the at least on temperature sensor and be configured to reduce the risk of false positives by filtering and compensating weight measurement data obtained during periods of relatively large variances of surrounding temperature before determining, by the local control unit and based on the compensated weight measurement readings, whether a leakage from the gas cylinder has occurred. The filtering may then include at least one of removing or discarding weight measurement data samples obtained from the load cell during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature.

In aspects, the technology disclosed relates to a monitoring system for detecting leakage from a fire extinguisher comprising a gas cylinder for containing gas and a load cell for measuring the weight of a unit comprising the cylinder. The monitoring system may then further comprise at least one temperature sensor for detecting surrounding temperature and a control system configured to collect surrounding temperature data from the at least one temperature sensor and compensate the weight measurement readings obtained from the load cell at least partly by filtering the weight measurement readings based on temperature variations during the weight measurements readings that have been determined by the control system based on temperature data indicative of the surrounding temperature detected by the at least on temperature sensor. The filtering may then include at least one of removing or discarding weight measurement data samples obtained from the load cell during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature.

In embodiments, both the weight measurement readings and the temperature data detected by the at least on temperature sensor may be transmitted by a local control unit (i.e. arranged at the fire extinguisher) of the control system to a remote computer unit for processing. The remote computer unit, for example in the cloud, of the control system may then receive the weight measurement readings and the temperature data detected by the at least on temperature sensor and be configured to reduce the risk of false positives by filtering weight measurement data obtained during periods of relatively large variances of surrounding temperature before determining, by the remote computer unit based on the compensated weight measurement readings, whether a leakage from the gas cylinder has occurred. The filtering may then include at least one of removing or discarding weight measurement data samples obtained from the load cell during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature.

In embodiments, the control system is further configured to determine whether a leakage from the cylinder has occurred at least partly based on the compensated weight measurement readings which are compensated at least partly based on the rate of surrounding temperature variations during the weight measurements readings.

In embodiments, the control system is configured to compensate the weight measurement readings obtained from the individual load cell based on both how the absolute surrounding temperature and the rate of surrounding temperature variations collected from the at least one temperature sensor affects the readings from the individual load cell.

In embodiments, the control system is configured to compensate the weight measurement readings obtained from the individual load cell based on the rate of surrounding temperature variations so that when the load cell is exposed to relatively fast temperature changes the control system will return another weight measurement value than when the load cell is exposed to slow temperature changes even when the weight was sampled at the exact same absolute surrounding temperature.

In embodiments, the technology disclosed relates to a fire extinguisher, a monitoring system and methods for filtering weight measurement data from a load cell of a fire extinguisher by discarding/removing weight measurement data and/or by applying weight factors to the weight measurement data obtained from the load cell. The control system may then be configured to discard/remove and/or apply smaller weight factor values to weight measurement data samples obtained from the load cell during period of relatively larger surrounding temperature variations and transmit and/or apply larger weight factor values to weight measurement data samples obtained during periods of relatively smaller surrounding temperature variations.

In embodiments, a local control unit of the control system of the fire extinguisher is configured to discard weight measurements data obtained from the load cell during period of relatively larger surrounding temperature variations and transmit, to a remote computer unit of the control system, weight measurement data obtained during periods of relatively smaller surrounding temperature variations.

In embodiments, the control system is configured to obtain input data or a model which determines how both surrounding temperature and the rate of surrounding temperature variations affect weight measurement readings from the individual load cell, and then compensate weight measurement readings obtained from the individual load cell based on the obtained input data or model.

In embodiments, the control system is configured to collect measurement data from both the load cell and at least one temperature sensor during the same, or substantially the same, time period and then adjust weight measurements obtained from the individual load cell based on the collected measurement data.

In embodiments, the control system is configured to collect, over a certain first time period, a range of measurement data from both the load cell and the temperature sensor and then determine, based on the collected range of measurement data, a model for compensating for further measurements obtained from the individual load cell including adjustments for how the rate of surrounding temperature variations affects the weight measurement readings from the individual load cell. The control system may then be configured to obtain further measurement readings from the load cell and the temperature sensor and compensate the further weight measurement readings from the individual load cell using the determined model for the individual load cell. In embodiments, the control system may be further configured to determine, based on the compensated weight measurement readings, whether leakage from the gas cylinder has occurred.

In embodiments, the control system comprises a local control unit configured to transmit, to a remote computer unit for further processing, data including compensated weight measurement readings obtained from the individual load cell, wherein the compensated weight measurement readings include adjustments for how the rate of surrounding temperature variations affects the readings from the individual load cell. The remote computer unit may then be configured to determine, based on the compensated weight measurement readings, whether leakage from the gas cylinder has occurred. In embodiments, the local control unit is further configured to remove weight measurement data samples obtained from the load cell during periods of large variances of surrounding temperature before transmitting the data including the compensated weight measurement readings to the remote computer unit for further processing, thereby reducing the risk of false positives and/or saving battery.

In embodiments, the local control unit is further configured to distribute the processing of weight measurement readings by filtering out weight measurement data obtained during periods of large variances of surrounding temperature before transmitting the weight measurement data to a remote computer unit for further processing, thereby reducing the risk of false positives and/or saving battery.

In embodiments, the local control unit is further configured to aggregate weight measurement data samples obtained from the load cell before transmitting the weight measurement data to the remote computer unit for further processing, thereby reducing the risk of false positives and/or saving battery. The local control unit may then be further configured to continuously adjust the aggregation of weight measurement data samples based on a determination of how the rate of surrounding temperature variations affects the readings from the individual load cell.

In embodiments, the local control unit is further configured to continuously adjust the frequency of transmission of weight measurement data samples to the remote computer unit based on a determination of how the rate of surrounding temperature variations affects the readings from the individual load cell, thereby reducing the risk of false positives and/or saving battery.

In various embodiments, the local control unit and/or the remote computer unit is further configured to apply weighting factors to weight measurement data samples so that samples that were obtained from the load cell during periods of small variances of surrounding temperature are given a greater importance for the determining whether leakage from the cylinder has occurred than samples obtained during periods of large variances of surrounding temperature. For example, the remote computer unit may be configured to obtain surrounding temperature data from the local control unit and apply weighting factors to weight measurement data samples received from the local control unit so that samples that were obtained by the load cell during periods of small variances of surrounding temperature are given a greater importance when determining whether leakage from the cylinder has occurred than samples obtained during periods of large variances of surrounding temperature.

In embodiments, data indicating external vibrations affecting the weight measurements and which is derived from weight measurements performed by the load cell may be used by the control system to determine how much the load cell is vibrating during the weight measurement readings. The control system may then be configured to use the obtained data indicating external vibrations to adjust/compensate the weight measurement readings obtained from the load cell at least partly based on the obtained data indicating external vibrations. In embodiments, the control system, e.g. the local control unit and/or a remote computer unit, is further configured to, based on the obtained data indicating external vibrations and which is derived from weight measurements, remove weight measurement data samples obtained from the load cell during periods of large vibrations, thereby reducing the risk of false positives.

In embodiments, the control system, e.g. a local control unit and/or a remote computer unit (cloud) is configured to derive vibration sensor data from surrounding weight measurement data obtained from the load cell and use the vibration sensor data derived from the surrounding weight measurement data to determine how much the load cell is vibrating during the weight measurement readings.

In embodiments, the monitoring system comprises at least one vibration sensor arranged at the fire extinguisher, and the control system, e.g. a local control unit and/or a remote computer unit (cloud), is configured to collect vibration sensor data from the at least one vibration sensor and, based on the collected vibration sensor data, determine how much the load cell is vibrating during the weight measurement readings.

In embodiments, the control system, e.g. a local control unit and/or a remote computer unit (cloud), is further configured to remove or discard weight measurement data samples obtained from the load cell during periods of relatively large vibrations.

In embodiments, the control system, e.g. s remote computer unit (e.g. the cloud), is configured to determine whether a leakage from the cylinder has occurred at least partly based on weight measurement readings which are compensated for the vibration sensor data obtained or derived during the weight measurement readings.

In embodiments, the control system, e.g. a remote computer unit (the cloud), is configured to determine whether a leakage from the cylinder has occurred at least partly based on weight measurement readings which are compensated for the absolute temperature of the surrounding temperature, the rate of surrounding temperature variations and the vibration of the load cell during the weight measurement readings.

In certain embodiments, the monitoring system comprises at least one vibration sensor arranged at the fire extinguisher, and wherein control system is further configured to collect vibration sensor data from the at least one vibration sensor and, based on the collected vibration sensor data, determine how much the load cell is vibrating during the weight measurement readings. In embodiments, the control system, e.g. the local control unit and/or a remote computer unit, is further configured to, based on the vibration sensor data obtained from the at least one vibration sensor data, remove weight measurement data samples obtained from the load cell during periods of large vibrations, thereby reducing the risk of false positives.

In embodiments, the remote computer unit is configured to determine whether a leakage from the cylinder has occurred at least partly based on weight measurement readings which are compensated for the vibration of the load cell during the weight measurement readings. In embodiments, the remote computer unit may be configured to determine whether a small leakage from the cylinder has occurred at least partly based on weight measurement readings which are adjusted/compensated for the absolute temperature of the surrounding temperature, the rate of surrounding temperature variations and the vibration of the load cell during the weight measurement readings.

In aspects, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, by the control system, surrounding temperature data from the at least one temperature sensor and weight measurement data from the load cell; and
b) compensating/adjusting, by the control system, weight measurement readings from the load cell at least partly based on the rate of surrounding temperature variations, thereby providing more accurate data for determining whether leakage from the cylinder has occurred and reducing the risk of false positives when determining whether a leakage from the cylinder has occurred.

In aspects, the technology disclosed relates to a a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) detecting, by at least one temperature sensor, surrounding temperature,
b) collecting, by the control system, surrounding temperature data from the at least one temperature sensor,
c) obtaining, by a load cell, weight measurement readings indicating the weight of the unit comprising the cylinder,
d) at least one of compensating and filtering, by the control system, the weight measurement readings obtained from the load cell at least partly based on the rate of surrounding temperature variations during the weight measurements readings, and
e) determining, by the control system, whether a leakage has occurred based on the compensated or filtered weight measurement readings, wherein the control system is configured to at least one of compensate and filter the weight measurement readings by at least one of removing or discarding weight measurement data samples obtained from the load cell during periods of relatively large variances of surrounding temperature and applying weighting factors to the weight measurement data samples.

In aspects, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, by the control system, surrounding temperature data from the at least one temperature sensor and weight measurement data from the load cell; and
b) filtering/compensating/adjusting, by the control system (for example a local control unit or remote compute unit in the cloud), weight measurement readings from the load cell at least partly based on the rate of surrounding temperature variations, where the filtering or compensating of the weight measurement readings include at least one of removing or discarding weight measurement data samples obtained from the load cell during periods of relatively large variances of surrounding temperature and applying weighting factors to the weight measurement data samples. This method provides for more accurate data for determining whether leakage from the cylinder has occurred and reduces the risk of false positives when determining whether a leakage from the cylinder has occurred as data samples obtained during periods of small variances of surrounding temperature are then typically given a greater importance for determining whether leakage from the cylinder has occurred than data samples obtained during periods of large variances of surrounding temperature.

In aspects, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, by the control system, surrounding temperature data from the at least one temperature sensor and weight measurement data from the load cell; and
b) filtering/compensating/adjusting, by the control system (for example a local control unit or remote computer unit located in the cloud), weight measurement readings from the load cell at least partly based on the rate of surrounding temperature variations, where the filtering or compensating of the weight measurement readings include at least one of removing or discarding weight measurement data samples obtained from the load cell during periods of relatively large variances of surrounding temperature and applying weighting factors to the weight measurement data samples,
c) determining, by the control system, whether a leakage has occurred based on the filtered/compensated weight measurement readings. This method provides for more accurate data for determining whether leakage from the cylinder has occurred and typically reduces the risk of false positives when determining whether a leakage from the cylinder has occurred as data samples obtained during periods of small variances of surrounding temperature are then typically given a greater importance for determining whether leakage from the cylinder has occurred than data samples obtained during periods of large variances of surrounding temperature.

In embodiments, the method according to the technology disclosed comprises that the weight measurement readings are compensated/adjusted by a remote computer unit of the control system receiving weight measurement reading from a local control unit of the fire extinguisher.

In embodiments, the method further comprises determining, by the remote computer unit, whether a leakage from the cylinder has occurred based at least partly on the compensated/adjusted weight measurement readings.

In embodiments, the method comprises determining, by a local control unit of the fire extinguisher, whether a leakage from the cylinder has occurred based at least partly on the compensated/adjusted weight measurement readings.

In embodiments, the method is comprising the step of compensating or adjusting, by the control system, the weight measurement readings obtained from the individual load cell based at least partly on how the rate of surrounding temperature variations obtained from the at least one temperature sensor affect the weight measurement readings from the individual load cell.

In embodiments, the method comprises compensating/adjusting, by the control system, the weight measurement readings obtained from the individual load cell based at least partly on both how the absolute surrounding temperature and the rate of surrounding temperature variations obtained from the at least one temperature sensor affect the weight measurement readings from the individual load cell.

In embodiments, the method comprises the step of collecting, by the control system, a range of measurement data from both the load cell and the at least one temperature sensor during the same, or substantially the same, time period and adjusting weight measurement readings from the individual load cell based on the collected range of measurement data.

In embodiments, the method comprises collecting, over a certain first time period, a range of measurement data from both the load cell and the temperature sensor and determining, based on the collected range of measurement data, a model for compensating for further weight measurements readings obtained from the individual load cell including adjustments for both how the absolute surrounding temperature and the rate of surrounding temperature variations affect the weight measurement readings from the individual load cell.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) collecting, over a certain first time period, a range of measurement data from both the load cell and the temperature sensor;
b) determining, based on the collected range of measurement data, a model, function and/or algorithm for compensating for further weight measurements readings obtained from the individual load cell including compensations for how the rate of surrounding temperature variations affect the weight measurement readings from the individual load cell;
c) obtaining, by the control system, surrounding temperature data from the at least one temperature sensor and weight measurement data from the load cell;
d) compensating/adjusting, by the control system and using the determined model, function and/or algorithm for compensating for further weight measurements readings, said obtained weight measurement data at least partly based on the model, thereby providing more accurate data for determining whether leakage from the cylinder has occurred and reducing the risk of false positives when determining whether a leakage from the cylinder has occurred; and
e) determining whether a leakage from the cylinder of the fire extinguisher has occurred at least partly based on the compensated weight measurement data.

In aspects and embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of: continuously obtaining weight measurement data from the load cell and surrounding temperature data from the at least one temperature sensor; filtering the obtained weight measurement data at least partly based on the obtained surrounding temperature; compensating the filtered weight measurement data at least partly based on the rate of surrounding temperature variations; and determining whether a leakage from the cylinder of the fire extinguisher has occurred at least partly based on the locally filtered and compensated weight measurement data.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, continuously by a local control unit, weight measurement data from the load cell and surrounding temperature data from the at least one temperature sensor;
b) filtering, by the local control unit located at the site of the fire extinguisher, the obtained weight measurement data at least partly based on the obtained surrounding temperature, wherein said filtering includes at least one action of discarding weight measurement samples during periods of relatively larger temperature variations and applying weighting factors to the obtained weight measurement data so that weight measurement data obtained during periods of relatively smaller temperature variations are given greater importance than other weight measurement data when subsequently determining whether a leakage has occurred; and
c) determining, by the remotely located computer unit, whether a leakage from the cylinder of the fire extinguisher has occurred at least partly based on the filtered weight measurement data.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, continuously by a local control unit, weight measurement data from the load cell and surrounding temperature data from the at least one temperature sensor;
b) filtering, by the local control unit located at the site of the fire extinguisher, the obtained weight measurement data at least partly based on the obtained surrounding temperature, wherein said filtering includes at least one action of discarding weight measurement samples during periods of relatively larger temperature variations and applying weighting factors to the obtained weight measurement data so that weight measurement data obtained during periods of relatively smaller temperature variations are given greater importance than other weight measurement data when subsequently determining whether a leakage has occurred; and
c) compensating, by a remotely located computer unit, said obtained weight measurement data at least partly based on a model including adjustments for the rate of temperature variations, thereby providing more accurate data for determining whether leakage from the cylinder has occurred and reducing the risk of false positives when determining whether a leakage from the cylinder has occurred; and
d) determining, by the remotely located computer unit, whether a leakage from the cylinder of the fire extinguisher has occurred at least partly based on the filtered and compensated weight measurement data.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) collecting, over a certain first time period, a range of measurement data from both the load cell and the temperature sensor;
b) determining, based on the collected range of measurement data, a model, function and/or algorithm for compensating for further weight measurements readings obtained from the individual load cell including compensations for how the rate of surrounding temperature variations affect the weight measurement readings from the individual load cell;
c) obtaining, continuously by the control system (e.g. a local control unit), weight measurement data from the load cell and surrounding temperature data from the at least one temperature sensor;
d) filtering, by the control system (e.g. a local control unit), the obtained weight measurement data at least partly based on the obtained surrounding temperature, wherein said filtering includes at least one action of discarding weight measurement samples during periods of relatively larger temperature variations and applying weighting factors to the obtained weight measurement data so that weight measurement data obtained during periods of relatively smaller temperature variations are given greater importance than other weight measurement data when subsequently determining whether a leakage has occurred;
e) compensating/adjusting, by the control system and using the determined model, function and/or algorithm for compensating for further weight measurements readings, said obtained weight measurement data at least partly based on the model, thereby providing more accurate data for determining whether leakage from the cylinder has occurred and reducing the risk of false positives when determining whether a leakage from the cylinder has occurred; and
f) determining whether a leakage from the cylinder of the fire extinguisher has occurred at least partly based on the filtered and compensated weight measurement data.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising filtering, by the control system, the obtained weight measurement data based on the obtained surrounding temperature data by discarding weight measurement data samples obtained during periods of relatively large variances of surrounding temperature.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising applying, by the control system, weighting factors to the weight measurement data samples so that data samples obtained during periods of small variances of surrounding temperature are given a greater importance for determining whether leakage from the cylinder has occurred than data samples obtained during periods of large variances of surrounding temperature.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising filtering, by the control system, the obtained weight measurement data based on the obtained surrounding temperature data by at least one discarding weight measurement data samples obtained during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature.

In embodiments, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) collecting, over a certain first time period, a range of measurement data from both the load cell and the temperature sensor;
b) determining, based on the collected range of measurement data, a model, function and/or algorithm for compensating for further weight measurements readings obtained from the individual load cell including compensations for how the rate of surrounding temperature variations affect the weight measurement readings from the individual load cell;
c) obtaining, by the control system, surrounding temperature data from the at least one temperature sensor and weight measurement data from the load cell;
d) filtering, by the control system, the obtained weight measurement data based on the obtained surrounding temperature data by at least one discarding weight measurement data samples obtained during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature;
e) compensating/adjusting, by the control system and using the determined model, function and/or algorithm for compensating for further weight measurements readings, said obtained weight measurement data at least partly based on the model, thereby providing more accurate data for determining whether leakage from the cylinder has occurred and reducing the risk of false positives when determining whether a leakage from the cylinder has occurred; and
f) determining whether a leakage from the cylinder of the fire extinguisher has occurred at least partly based on the compensated weight measurement data.

In embodiments, the method comprises obtaining, by the control system, further measurement readings from the load cell and the temperature sensor, and compensating, by the control system, the further weight measurement readings from the individual load cell using the determined model for the individual load cell.

In embodiments, the method comprises determining, by the control system and based on the compensated/adjusted weight measurement readings, whether a leakage from the cylinder has occurred.

In embodiments, the control system comprises a local control unit and the method comprises transmitting, by the local control unit and to a remote computer unit for further processing, data including compensated/adjusted weight measurement readings obtained from the individual load cell, wherein the compensated weight measurement readings include adjustments for how the rate of surrounding temperature variations affect the readings from the individual load cell. In embodiments, the method further comprises removing, by the local control unit, weight measurement data samples obtained from the load cell during periods of large variances of surrounding temperature before transmitting the data including the compensated/adjusted weight measurement readings to the remote computer unit for further processing, thereby reducing the risk of false positives and/or saving battery.

In embodiments, the method further comprises aggregating, by the local control unit, weight measurement data samples obtained from the load cell before transmitting the weight measurement data to the remote computer unit for further processing, thereby reducing the risk of false positives and/or saving battery. In embodiments, the method further comprises continuously adjusting, by the local control unit, the aggregation of weight measurement data samples based on a determination of how the rate of surrounding temperature variations affects the readings from the individual load cell.

In embodiments, the method further comprising continuously adjusting, by the local control unit, the frequency of transmission of weight measurement data samples to the remote computer unit based on a determination of how the rate of surrounding temperature variations affects the readings from the individual load cell, thereby reducing the risk of false positives and/or saving battery.

In embodiments, the method further comprises applying, by the local control unit of the fire extinguisher, weighting factors to weight measurement data samples so that samples that were obtained from the load cell during periods of small variances of surrounding temperature are given a greater importance for the determining whether leakage from the cylinder has occurred than samples obtained during periods of large variances of surrounding temperature.

In embodiments, the method comprising applying, by the remote computer unit, weighting factors to weight measurement data samples received from the local control unit so that samples that were obtained by the load cell during periods of small variances of surrounding temperature are given a greater importance than samples obtained during periods of large variances of surrounding temperature when determining, by the remote computer unit, whether leakage from the cylinder has occurred.

In embodiments, the control system is configured to at least one of filter and compensate weight measurement data based on vibration sensor data which is at least one of obtained by the control system from a separate vibration sensor and derived by control system from the weight measurement reading, and wherein the control system is further configured to determine whether a leakage from the cylinder has occurred at least partly based on the vibration filtered or compensated weight measurement data.

In embodiments, the method comprises the steps of deriving vibration data from weight measurements performed by the load cell and using, by a local control unit and/or a remotely located computer unit of the control system, the data vibration data derived from weight measurements to determine how much the load cell is vibrating during the weight measurement readings. The local control unit or the remotely located computer unit may then be configured to compensate/adjust the weight measurement data based on how much the load cell is vibrating during the weight measurement readings and then determine whether leakage from the cylinder of the fire extinguisher has occurred at least partly based on the vibration data derived from weight measurements performed by the load cell and at least partly based on a determination by the control system of how the rate of surrounding temperature variations affects the readings from the individual load cell.

In embodiments, at least one vibration sensor is arranged at the fire extinguisher, and the method further comprises collecting, by the control system, vibration sensor data from the at least one vibration sensor. The local control unit or the remotely located computer unit may then be configured to compensate/adjust the weight measurement data based on how much the load cell is vibrating during the weight measurement readings based on vibration sensor data obtained from the vibration sensor and then determine whether leakage from the cylinder of the fire extinguisher has occurred at least partly based on the vibration data derived from weight measurements performed by the load cell and at least partly based on a determination by the control system of how the rate of surrounding temperature variations affects the readings from the individual load cell.

In embodiments, at least one vibration sensor is arranged at the fire extinguisher and the method comprises obtaining, by the control system and from the at least one vibration sensor, vibration sensor data, and removing, by the local control unit, weight measurement data samples obtained from the load cell during periods of large vibrations before transmitting weight measurement data samples to a remote computer unit, thereby reducing the risk of false positives.

In embodiments, the method further comprises determining, by the remote computer unit, whether leakage from the cylinder has occurred at least partly based on weight measurement readings which are compensated/adjusted for at least both the rate of surrounding temperature variations and the vibration of the load cell during the weight measurement readings.

In embodiments, the method further comprises determining, by the remote computer unit, whether a leakage from the cylinder has occurred at least partly based on weight measurement readings which are compensated for the absolute temperature of the surrounding temperature, the rate of surrounding temperature variations and the vibration of the load cell during the weight measurement readings.

In embodiments, at least one movement sensor, e.g. an accelerometer, is arranged at the fire extinguisher and the method comprises obtaining, by the control system and from the at least one movement sensor, movement sensor data, and removing, by the local control unit, weight measurement data samples obtained from the load cell during periods of large movements of the fire extinguisher before transmitting weight measurement data samples to a remote computer unit, thereby reducing the risk of false positives. In embodiments, the method further comprises determining, by the remote computer unit, whether leakage from the cylinder has occurred at least partly based on weight measurement readings which are compensated/adjusted for at least both the rate of surrounding temperature variations and the movements of the load cell during the weight measurement readings.

In embodiments, the method further comprises determining, by the remote computer unit, whether a leakage from the cylinder has occurred at least partly based on weight measurement readings which are compensated for the absolute temperature of the surrounding temperature, the rate of surrounding temperature variations, the vibration of the load cell during the weight measurement readings and the movements of the fire extinguisher determined by the movement sensor data obtained from the movement sensor, e.g. accelerometer.

In aspects, the technology disclosed relates to a fire extinguisher comprising a cylinder for containing gas and a load cell for measuring the weight of a unit comprising the cylinder. The fire extinguisher further comprises at least one temperature sensor for detecting surrounding temperature and a local control unit configured to first collect surrounding temperature data from the at least one temperature sensor and then compensate/adjust the weight measurement readings obtained from the load cell at least partly based on the rate of surrounding temperature variations during the weight measurements readings.

### BRIEF DESCRIPTION OF DRAWINGS

Preferred embodiments of a fire extinguisher and monitoring system according to the technology disclosed will be described more in detail below with reference to the accompanying drawings wherein:
In the following, the technology disclosed will be described in detail, with reference to exemplifying embodiments and to the enclosed drawings, wherein:
Figure 1 is a schematic and perspective view of a monitoring system and fire extinguisher according to an example embodiment of the technology disclosed;
Figure 2 is a schematic and more detailed view of a fire extinguisher according to an example embodiment of the technology disclosed; and
Figure 3 is a flowchart illustrating a method according to an example embodiment of the technology disclosed.

### DETAILED DESCRIPTION

In the drawings, similar details are denoted with the same reference number throughout the different embodiments. In the various embodiments of the fire extinguisher, monitoring system and control system according to the technology disclosed, the different subsystems are denoted. The "boxes"/subsystems shown in the drawings are by way of example only and can within the scope of the technology disclosed be arranged in any other way or combination. In the drawings, similar details are denoted with the same reference number throughout the different embodiments.

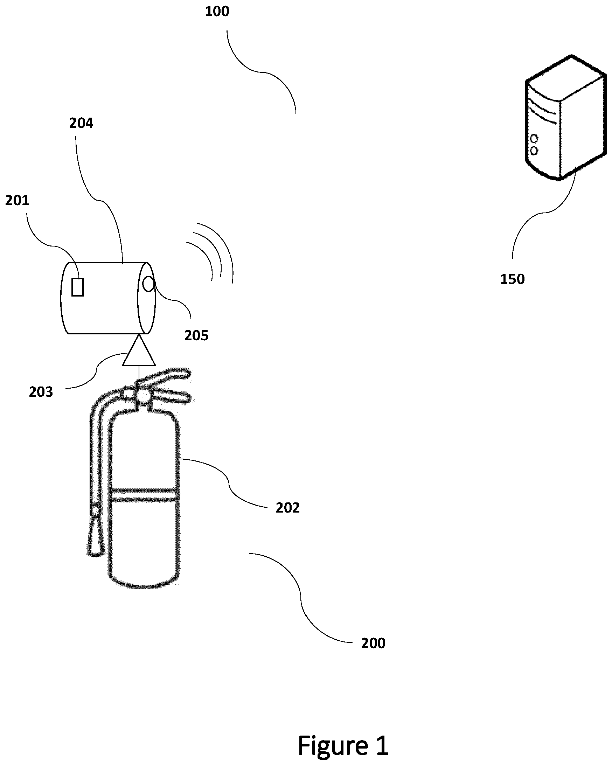

Figure 1 is a schematic and perspective view of a monitoring system 100 and fire extinguisher 200 according to an example embodiment of the technology disclosed. In this example embodiment, the control system of the monitoring system 100 comprises a local control unit 201 and a remote computer unit 150, e.g. located in the cloud. The fire extinguisher 200 comprises a cylinder 202 for containing gas and a fire agent and a bracket 203 for attaching the cylinder 202 and for connecting the cylinder 202 to a unit 204 comprising sensor means (not shown). The unit 204 in the example embodiment illustrated in Figure 1 comprises the local control unit 201 and a wireless transmitter 205 for transmitting measurement data to the remote computer 150 via a communications network (not shown).

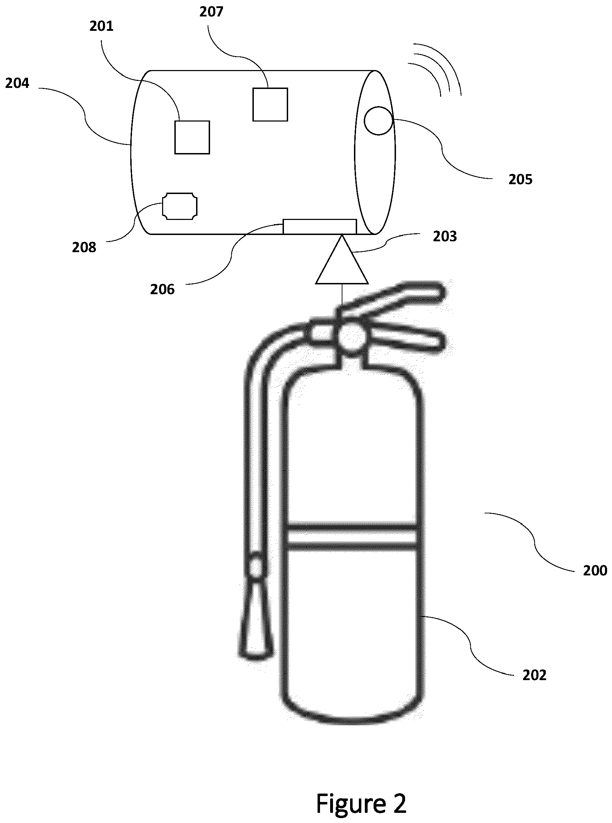

Figure 2 is a schematic and more detailed view of a fire extinguisher 200 according to an example embodiment of the technology disclosed. In this example embodiment, the fire extinguisher 200 comprises a cylinder 202 for containing gas and a fire agent, and a bracket 203 for attaching the cylinder 202 and for connecting the cylinder 202 to a unit 204 comprising sensor means. The unit 204 comprises sensor means in form of a load cell 206 for measuring the weight of the cylinder and a temperature sensor 207 for measuring the surrounding temperature. In the example embodiment illustrated in Figure 2, the unit 204 further comprises a power source 208 (e.g. battery), a local control unit 201 and a wireless transmitter 205 for transmitting measurement data to the remote computer 150 via a communications network (not shown).

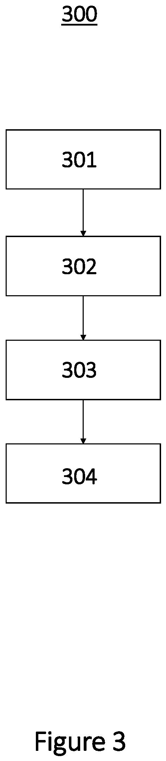

Figure 3 is a flowchart illustrating a method according to an example embodiment of the technology disclosed.

In step 301, the local control unit 201 is continuously obtaining weight measurement data from the load cell 206 and surrounding temperature data from the at least one temperature sensor 207.

In step 302, the obtained weight measurement data is locally filtered by the local control unit 201 at least partly based on the obtained surrounding temperature data.

In step 303, the remote computer unit 150 receives the filtered weight measurement data transmitted by the local control unit 201 and then compensates the filtered weight measurement data at least partly based on the rate of surrounding temperature variations.

In step 304, the remote computer unit 150 is determining whether a leakage from the cylinder 202 of the fire extinguisher 200 has occurred at least partly based on the locally filtered and compensated weight measurement data. Frequent inspections of fire extinguishers are generally considered cost prohibitive, even where it is recognized that a problem of numbers of missing or non-functioning fire extinguishers may not be addressed for days or even weeks at a time, even where manpower may otherwise be available. To avoid unwanted and costly manual inspections of the fire extinguisher, one of the objectives of the technology disclosed is to reduce the risk of false positives when determining whether a leakage from the cylinder of the fire extinguisher has occurred.

Prior art solutions describe methods for determining a leakage from the gas cylinder of a fire extinguisher by recording load cell data with temperature as a reference and comparing collected data with the reference data with a temperature compensation. These methods are limited to determining a leakage if the difference between collected data and the load cell data with temperature as a reference exceeds a certain value, e.g. 0.5%, i.e. weight changes above 50 grams per 10.000 grams, and will also provide a high risk for false positives when determining whether a leakage from the gas cylinder has occurred because weight measurements are not compensated for the rate of temperature variations. The high risk of false positives when using a threshold value for determining whether leakage from the cylinder has occurred will lead to unwanted service and costly manual inspections of the fire extinguisher.

Thus, prior art solutions for detecting leakage from the gas cylinder of a fire extinguisher will only detect changes above 50 grams per 10.000 grams. That is not precise enough to detect leaking propellant (often nitrogen gas) from the fire extinguisher. If all nitrogen gets out of a bottle, then it can be down to 25 grams of a 10 kg fire extinguisher. When the propellant has leaked out of the cylinder/container/bottle, then the fire extinguisher will simply not work.

The inventors have realized that the monitoring of small weight changes for a fire extinguisher may be influenced by various factors, such as the rate of temperature changes and vibrations causing variations for a period or for settling the physical properties of the steel bar in load cells. However, larger weight changes per time unit are typically not significantly influenced by smaller temperature changes or vibrations. For large vibrations and bumps, the control system will typically be reset and needs to learn again, for example if the weight changes are significant or if the fire extinguisher is dismounted and then mounted again.

Smaller weight changes that shift the absolute weight temporarily or permanently to a new level, may be indications of events to record and needs to be investigated to avoid false positives when determining whether leakage from the cylinder has occurred. These weight shifts may also be caused by other factors than leakage, e.g., birds making nest, a stolen hose or safety pin, etc. Since these weight shifts are typically caused by other factors than leakage, the use of thresholds would produce many false positives and lead to unwanted manual inspections of fire extinguishers. The technology disclosed introduces the use of more advanced temperature compensation and/or filtering of weight measurement data enabling improved identification of the cause for these weight changes before determining whether a leakage has occurred, thereby providing improved weight measurement data and reducing the risk of false positives.

The prior art solutions for detecting leakage from a fire extinguisher may typically only be used for detecting larger weight changes such as changes above 50 grams per 10.000 grams. That is not precise enough to detect leaking propellant (often nitrogen gas) from the cylinder of the fire extinguisher. If all nitrogen gets out of a bottle, then it can be down to 25 grams of a 10 kg fire extinguisher. When the propellant has leaked out of the bottle, then the fire extinguisher will not work.

Moreover, by simply using a fixed threshold value of 0.5% for the difference between pre-collected data and the load cell data when determining whether there is leakage from a fire extinguisher will lead to a high rate of false positives. The prior art does not provide solutions for detecting very small leakage of propellant such as nitrogen gas from the cylinder of the fire extinguisher. 3-7 grams nitrogen loss is typically enough to damage the function of the fire extinguisher, but the loss will continue, until most is out of the cylinder, which amounts to 25-50 grams before reaching atmospheric pressure (0.1Mpa/1bar). The objectives of the technology disclosed include to provide a solution for detecting very small leakage per time unit from the cylinder of a fire extinguisher. The technology disclosed enables the detection of very small leakage per time unit of propellant such as nitrogen gas from the gas cylinder yet provides a solution which reduces the risk of false positives when determining whether leakage has occurred.

Thus, the objectives of the technology disclosed include to provide a solution for detecting leaking propellant such as nitrogen gas from the cylinder of the fire extinguisher. 3-7 grams nitrogen loss is enough to damage the function of the fire extinguisher, but the loss will continue, until most is out of the cylinder, which typically amounts to 25-50 grams before reaching atmospheric pressure (0.1Mpa/1bar).

To detect below 25 grams changes, the inventors have recognized that monitoring of leakage by using intelligent processing and compensation of weight measurement data and history recording will be needed to detect these small weight changes than what is used in the relatively simple prior art solutions. The inventors have further recognized a need for more selective and intelligent compensation of obtained weight measurement data to be able to determine whether a very small leakage from the gas cylinder of a fire extinguisher has occurred, e.g. to detect below 25 gram weight changes, yet the technology disclosed provides a solution with a reduced risk for detecting false positives when determining whether a leakage has occurred.

The control system of the technology disclosed learns how the weight of the gas cylinder depends on temperature and variations in temperature, i.e. the slope of change in temperature. Once learned, weight values will get temperature-compensated before applying algorithms for detecting loss of weight. If temperature moves out of previously known bounds, then the compensation values gets re-calculated.

The inventors have realized that temperature compensation depends on the mounting, characteristics and properties of the individual load cell and that the temperature compensation has different values for monitoring of larger weight changes and very low weight changes, e.g. due to the loss of pressure/manometer. For example, a chosen 30kg steel load cell may have a 0.03% change in weight per 10 degrees. That is +-0.9 grams per 1°C. Variations in temperature and weight which are averaged over longer period and moving outside the above "bounds" may then be an indication of an anomaly, i.e. an indication that something is wrong. Therefore, it is useful identifying small weight drops, and avoid more false positives when determining whether leakage has occurred. The technology disclosed provides a solution for identifying very small weight drops, e.g. below 25 gram weight changes, yet provides a solution which reduces the risk of false positives when determining whether leakage from the cylinder of a fire extinguisher has occurred. Monitoring of low weight changes can get interrupted or disturbed by different anomalies, such as bumps causing variations for a period or having to wait a longer time for settling the physical properties of the steel bar (called creep in load cells). According to the technology disclosed and on interruption of the low weight changes, then measured gas loss in grams may then get "banked" and remembered until you have a stable system again making it possible to calculate new values for temperature compensating and offsets (re-calibrating).

In embodiments, some physical properties of the load-cells may be used for detecting anomalies in the algorithms: For example, for any load cell, it is known that the weight changes with +-0.9 grams per 1°C. However, it is individual for each load cell, where in the span between +-0.9 grams per 1°C. Some load cells go up, others down, with increasing temperature. Some changes a lot, others only a bit. The targets typically need to be reached slowly, not fast, i.e. measured over days and not just between a few samples. This is due to gas escaping slowly, not fast, through cracks in the cylinder or container (it is not a "popped balloon", but a "punctured balloon"). Once the cylinder or container has a crack, then gas will typically continue to leak out until empty (all air comes out of the "punctured balloon", until flat). Typically, 3-7 grams nitrogen loss is enough to damage the function of the fire extinguisher, but the loss will continue, until most is out (of the "balloon"), which amounts to 25-50grams before reaching atmospheric pressure (0.1Mpa/1bar). Tests performed by the inventors have shown that the rate of temperature change has an effect on the changes in measuring the weight. A quick change to temperature T0, may result in another weight measurement than a slow change to same absolute temperature T0. The conclusions drawn from this insight is that it is necessary to monitor and learn how each individual load cell is affected by the rate of the change of surrounding temperature.

In example embodiments directed to the compensation for disturbances in both vibrations and temperature, the collection of data may be performed by sampling in approximately 30 minutes by collecting a range of measurements (>500 actual measurements). In basic and according to this example embodiment, the control system collects statistical properties in a period of time to get a value describing how much weight and temperature changes/vibrates. The algorithm used by the control system then takes into account that weight sensors, or load cells, being exposed to fast temperature changes will return another weight value than weight sensors being exposed to slow temperature changes - even when the weight was sampled at the exact same momentary temperature. So, to be more precise, it is relevant to know how "fast" the temperature changes had happened. According to this embodiment, the local control unit or the remote computer unit or cloud may then decide to remove or discard samples which have been obtained during periods that are too "vibrating" or outside known temperature swings (called anomalies).

In aspects and embodiments, the technology disclosed may be used for detecting very small leakage from a fire extinguisher by first determining a model, algorithm or function for the individual load cell by comparing collected data with reference statistical data to determine a model, algorithm or function for how the rate of temperature variations during the collection of the weight measurement data affects the readings from the load cell even when weight is sampled at the same momentary temperature.

In aspects and embodiments, the technology disclosed may be used for detecting periods of large variances in temperature and/or vibrations based on reference statistical data and avoiding false positives by filtering, e.g. discarding and/or applying weighting factors, samples collected during periods of large variances in temperature and/or vibrations.

In aspects and embodiments, the technology disclosed provides for the distribution of data processing by local filtering of measurement data obtained by the individual load cell during periods of large variances in temperature and/or vibrations before transmitting the obtained measurement data to a remote compute unit such as the cloud for further processing (to thereby reduce the risk of false positives and save battery). The local filtering out of weight measurement samples may be based on a determined rate of temperature variations and/or vibrations during the period that the samples were collected.

In aspects and embodiments, the technology disclosed may provide a solution for saving battery time by using sample aggregation and adjusting the frequency of transmission of samples from the load cell to the cloud, may also be useful in combination with the above identified concepts.

In example embodiments, the technology disclosed may use sensor sampling to pick up the physical properties of the individual load cell (low weight-loss monitoring). Relative load cell sensor readings may then be used, i.e. the relative measurement of weight in grams, because typically a "tare" is not used to know the offsets. The measurements may be sampled with a precision of 0.3 degrees over a period of a 2 seconds taking 100 individual measurements. The relative surrounding temperature may be measured with 0.1 degrees precision. The standard deviation in temperature, may be measured at 5 minutes intervals, beginning 30 minutes before making a load cell sensor reading. The standard deviation in weight, may be measured along the standard deviation of temperature. To pick up the load cell behaviour on slow and quick temperature changes, the above samples may be transmitted to the cloud for further processing and/or determining whether a leakage has occurred.

In example embodiments, an algorithm may be used for low weight-loss monitoring. The algorithm may typically not depend on the actual absolute weight of a gas cylinder. Instead, the controls system will learn the properties of the individual load cell, represented by the sensor samplings, into algorithmic coefficients.

Each load cell temperature, weight reading, temperature standard deviation and weight standard deviation may be monitored and compared to the "learned" algorithmic coefficients. Quick changes to the weight (e.g. a quick drop of 10 grams), happening within the same day, will be flagged as a warning or event, and not as a gas-loss expected to happen slowly. If readings of load cell weight measurements move outside of the "learned" algorithmic coefficients, then the control system may be configured to determine that there is an anomaly. Such anomalies will cause the control system, e.g. by use of a cloud algorithm, to begin an investigation of the specific load-cell (fire-extinguisher).

Investigation of anomalies may sort out false positives or categorize a change into either gas-loss, ignored or none-gas loss, e.g. something placed on top of the fire extinguisher (birds nest, lots of spiders...), or removed, some parts stolen, indications of malfunction, damaged or bend bracket or something that was only temporary, e.g. cleaning the fire extinguisher at same time as performing the load cell weight measurement readings.

These investigations may take days to perform, to sort out the false positives and allow the sensors to fall back at rest (as we cannot know what has happened for real). It can even take 1-2 weeks to investigate a gas-loss event, before alarming. The algorithm may utilize the fact that gas-loss will continue until atmospheric pressure is reached. An early warning on gas-loss is expected to continue, which will turn the warning into an alarm where more certain that gas has been lost. Getting to this conclusion could take 4-6 weeks.

Algorithmic tricks of the technology disclosed may include to avoid waiting too long for variations in temperature to build a model for a particular load cell (the coefficients), keeping track of minimum and maximum exposed temperatures to recalculate new model coefficients when moving outside previously learned temperature ranges (e.g. when summer becomes winter). Over time the model will then gradually become better and better as it is exposed to other ranges of temperature. To avoid a high CPU and memory use (is converted into cost, and basically proportional to energy consumption in cloud, which can be quite substantial), then anomaly detection in normal mode, does not have to compensate all sensor readings, but may simply count the newly sensor value and compare their temperature span and weight changes to the expected coefficients before starting a much more energy consuming investigation process. Example: for some load-cell, it is ok if the weight varies with 10 grams as the temperature has also moved 5 degrees - but it would require investigation if it did not (less or more).

In various embodiments of the technology disclosed, the sensor components to support monitoring of gas loss includes a load-cell (weighing system), a NTC Temperature sensor (close to load-cell, to make temperature compensations of weight values.in cloud), an accelerometer for picking up motion, and avoiding using the battery-consuming load-cell for detection of disturbances (poking of the fire extinguisher, birds, flies etc), and an accelerometer for detecting whether the mount is bent or tilts over the years, which will cause displacement and small changes in weight, e.g. the entire mount may eventually fall down from the wall.

Nothing in the algorithms of the technology disclosed are typically dependent on the "real absolute weight" of a fire extinguisher. The algorithms typically only care about the approximate weight to check if something is mounted in a reasonable scale +- 2 kilos. Therefore, the load cells can be used straight from the factory, as they will return the same values typically within 1 % for the same temperatures (+-200grams for 20kg fire extinguisher). In embodiments, however, a tare weight may be used for user interaction or detection of container type. The cloud may then be configured to perform this by asking the installer to dismount and remount the fire extinguisher in a sequence dictated by an app or installer-user-interface.

The filtering of disturbances by each individual sensor (not the cloud) may include awaiting better time for data collection when current time is not usable (better data, only spend battery on good data). As an example, large slope or high-frequent variation in temperature will cause data collection to be postponed, e.g. slope > 1 degree per 5 minutes, more than 5 changes of 0.5 degrees over last 30 minutes. These values may change when the control system gets more clever over time. The variations are currently shipped to cloud for storage and later checks, e.g over a larger fleet of installed sensors.

High-frequent variations in weight may cause data collection to be postponed based on the conclusion that something is making the wall shake, or may cause the control systems to discard the samples. Amplitudes above 5 grams of weight going up and down during the last 30 minutes measurements may also cause data collection to be postponed or may cause the control systems to discard the samples.

In embodiments and if a period is skipped, then the control system may be configured to transmit anyway within the next 2 hours (no matter the disturbances). One could say that the disturbances were not temporary but seems to be long-lasting. The transmission will include the variation numbers (standard variation) for temperature and weight. The cloud should then store the data for analysing the fleet of sensors, and may alert or flag that a leakage has occurred.

The above values may change when we get more "clever" over time. The variations shipped to cloud can then also be used later to do checks over a larger fleet of installed sensors. Sensor components that may be used to support filtering of disturbances may include aload cell (steel), e.g. ame circuit as used for ordinary weight measurement using a load cell, a NTC component for temperature measurement, located close to the steel load-cell and an accelerometer that may be used for detecting and quantifying motion and degrees of "shake", to thereby avoid waking up all components in case the environment is too "shaky", and thereby save the battery-power until a better time.

The technology disclosed relates to a fire extinguisher and a monitoring system for detecting small leakage from a gas cylinder of fire extinguisher. The monitoring system comprises a load sensor for measuring the weight of the gas cylinders and at least one temperature sensor for detecting a temperature local to the cylinder, i.e. a surrounding, ambient or environmental temperature.

The fire extinguisher further comprises a control system configured to collect surrounding temperature data from the at least one temperature sensor and compensate the weight measurement readings obtained from the load cell at least partly based on the rate of surrounding temperature variations during the weight measurements readings, thereby reducing the risk of false positives when determining whether a leakage from the cylinder has occurred.

In embodiments, the technology disclosed relates to a monitoring system comprising a control system configured to collect surrounding temperature data from the at least one temperature sensor and at least one of filter weight measurement data and compensate the weight measurement readings obtained from the load cell at least partly based on the rate of surrounding temperature variations during the weight measurements readings, thereby reducing the risk of false positives when determining whether a leakage from the cylinder has occurred.

In embodiments, the technology disclosed relates to a monitoring system comprising a control system configured to collect surrounding temperature data from the at least one temperature sensor and at least one of discard weight measurement data, apply weighting factors to weight measurement data and compensate the weight measurement readings obtained from the load cell at least partly based on the rate of surrounding temperature variations during the weight measurements readings, thereby reducing the risk of false positives when determining whether a leakage from the cylinder has occurred.

In embodiments, the technology disclosed relates to a monitoring system comprising a control system configured to collect surrounding temperature data from the at least one temperature sensor and at least one of filter and compensate the weight measurement readings obtained from the load cell at least partly based on both the absolute surrounding temperature and the rate of surrounding temperature variations during the weight measurements readings, thereby reducing the risk of false positives when determining whether a leakage from the cylinder has occurred.

In embodiments, the technology disclosed relates to a monitoring system comprising a control system configured to collect surrounding temperature data from the at least one temperature sensor and compensate the weight measurement readings obtained from the load cell at least partly based on both the absolute surrounding temperature and the rate of surrounding temperature variations during the weight measurements readings, thereby reducing the risk of false positives when determining whether a leakage from the cylinder has occurred.

In embodiments, the technology disclosed relates to a monitoring system comprising a control system configured to collect surrounding temperature data from the at least one temperature sensor and compensate the weight measurement readings obtained from the load cell at least partly based on the absolute surrounding temperature, the rate of surrounding temperature variations and local vibrations during the weight measurements readings, thereby reducing the risk of false positives when determining whether a leakage from the cylinder has occurred.

In embodiments, the technology disclosed relates to a control system of a monitoring system which is configured for filtering weight measurement data from a load cell of a fire extinguisher by at least one of discarding weight measurement data and applying weight factors to the weight measurement data obtained from the load cell based on obtained temperature sensor data indicative of surrounding temperature variations during the period for the weight measurement readings.

In embodiments, the control system is configured to discard weight measurement data obtained by the load cell during periods of relatively large surrounding temperature variations before determining whether leakage from the gas cylinder of the fire extinguisher has occurred.

In embodiments, the control system comprises a local control unit and a remotely located computer unit and the local control unit is configured to discard weight measurement data obtained by the load cell during periods of relatively large surrounding temperature variations, thereby reducing the risk of false positives when the control system is determining whether a leakage from the cylinder of the fire extinguisher has occurred.

In embodiments, the control system is configured to filter data by applying relatively small weight factors to weight measurement data obtained by the load cell during periods of relatively large surrounding temperature variations. In embodiments, the local control unit and/or the remote computer unit may then be configured to apply relatively smaller weighting factors to weight measurement data obtained during periods of relatively large temperature variations and apply relatively smaller weighting factors to weight measurement data to obtained by the load cell during periods of relatively small temperature variations. The remotely computer unit may then be configured to perform further processing on weight measurement data with applied weighting factors and/or determine whether a leakage from the cylinder of the fire extinguisher has occurred based on weight measurement data with applied weighting factors, thereby reducing the risk of false positives when determining whether a leakage from the cylinder has occurred.

In embodiments, the control system comprises a local control unit and a remotely located computer unit and the local control unit is configured to filter data by applying relatively smaller weight factors to weight measurement data obtained by the load cell during periods of relatively large surrounding temperature variations and by applying relatively larger weight factors to weight measurement data obtained by the load cell during periods of relatively smaller surrounding temperature variations. The local control unit may then be configured to apply weighting factors to weight measurement data before transmitting the weight measurement data to the remotely located computer unit. The remotely located computer unit may then receive weight measurement data with the applied weighting factors from the local control unit. The remotely computer unit may then be configured to perform further processing on the received weight measurement data with applied weighting factors and/or determine whether a leakage from the cylinder of the fire extinguisher has occurred based on weight measurement data with applied weighting factors, thereby reducing the risk of false positives when determining whether a leakage from the cylinder of the fire extinguisher has occurred.

In embodiments, the control system comprises a local control unit and a remotely located computer unit and the local control unit is configured to filter data by discarding weight measurement data obtained by the load cell during periods of relatively large surrounding temperature variations. The local control unit may then be configured to discard weight measurement data obtained during periods of relatively large temperature variations and only transmit weight measurement data to the remotely located computer unit which was obtained by the load cell during periods of relatively small temperature variations. The remotely located computer unit may then only receive weight measurement data from the local control unit obtained during periods of relatively small temperature variations. The remotely computer unit may then be configured to perform further processing on the received weight measurement data and/or determine whether a leakage from the cylinder of the fire extinguisher has occurred based on weight measurement data obtained by the load cell during periods of relatively small surrounding temperature variations, thereby reducing the risk of false positives when determining whether a leakage from the cylinder has occurred.

In aspects, the technology disclosed relates to a method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, by the control system, surrounding temperature data from the at least one temperature sensor and weight measurement data from the load cell; and
b) compensating, by the control system, weight measurement readings from the load cell at least partly based on the rate of surrounding temperature variations.

In embodiments, the method includes that the weight measurement readings are compensated by the control system, e.g. by a remote computer unit of the control system receiving weight measurement reading from a local control unit of the fire extinguisher.

In embodiments, the method further comprising determining, by the control system, e.g. the remote computer unit, whether a leakage from the cylinder has occurred based at least partly on the compensated weight measurement readings.

In embodiments, the method comprising determining, by a local control unit of the fire extinguisher, whether a leakage from the cylinder has occurred based at least partly on the compensated weight measurement readings.

In embodiments, the method comprising compensating, by the control system, the weight measurement readings obtained from the individual load cell based at least partly on how the rate of surrounding temperature variations obtained from the at least one temperature sensor affect the weight measurement readings from the individual load cell.

In embodiments, the method comprising compensating, by the control system, the weight measurement readings obtained from the individual load cell based at least partly on both how the absolute surrounding temperature and the rate of surrounding temperature variations obtained from the at least one temperature sensor affect the weight measurement readings from the individual load cell.

In embodiments, the method comprising collecting, by the control system, a range of measurement data from both the load cell and the at least one temperature sensor during the same, or substantially the same, time period and adjusting weight measurement readings from the individual load cell based on the collected range of measurement data.

In embodiments, the method comprising collecting, over a certain first time period, a range of measurement data from both the load cell and the temperature sensor and determining, based on the collected range of measurement data, a model, function and/or algorithm for compensating for further weight measurements readings obtained from the individual load cell including compensations for both how the absolute surrounding temperature and the rate of surrounding temperature variations affect the weight measurement readings from the individual load cell.

In embodiments, the method comprising obtaining, by the control system, further measurement readings from the load cell and the temperature sensor, and compensating, by the control system, the further weight measurement readings from the individual load cell using the determined model for the individual load cell.

In embodiments, the method comprising determining, by the control system and based on the compensated weight measurement readings, whether a leakage from the cylinder has occurred.

In embodiments, the control system comprises a local control unit and the method is comprising transmitting, by the local control unit and to a remote computer unit for further processing, data including compensated weight measurement readings obtained from the individual load cell, wherein the compensated weight measurement readings include adjustments for how the rate of surrounding temperature variations affect the readings from the individual load cell.

In embodiments, the method further comprising removing, by a local control unit, weight measurement data samples obtained from the load cell during periods of large variances of surrounding temperature before transmitting the data including the compensated weight measurement readings to the remote computer unit for further processing, thereby reducing the risk of false positives and/or saving battery.

In embodiments, the method further comprising aggregating, by the local control unit, weight measurement data samples obtained from the load cell before transmitting the weight measurement data to the remote computer unit for further processing, thereby reducing the risk of false positives and/or saving battery.

In embodiments, the method further comprising continuously adjusting, by the local control unit, the aggregation of weight measurement data samples based on a determination of how the rate of surrounding temperature variations affects the readings from the individual load cell.

In embodiments, the method further comprising continuously adjusting, by the local control unit, the frequency of transmission of weight measurement data samples to the remote computer unit based on a determination of how the rate of surrounding temperature variations affects the readings from the individual load cell, thereby reducing the risk of false positives and/or saving battery.

In embodiments, the method further comprising applying, by the control system, e.g. a local control unit of the fire extinguisher, weighting factors to weight measurement data samples so that samples that were obtained from the load cell during periods of small variances of surrounding temperature are given a greater importance for the determining whether leakage from the cylinder has occurred than samples obtained during periods of large variances of surrounding temperature.

In embodiments, the method comprising applying, by the remote computer unit, weighting factors to weight measurement data samples received from the local control unit so that samples that were obtained by the load cell during periods of small variances of surrounding temperature are given a greater importance than samples obtained during periods of large variances of surrounding temperature when determining, by the remote computer unit, whether leakage from the cylinder has occurred.

In embodiments, the method is comprising deriving, by the control system, vibration sensor data from weight measurements obtained by the load cell and using, by the control system, the vibration sensor data to determine how much the load cell is vibrating during the weight measurement readings.

In embodiments, at least one vibration sensor is arranged at the fire extinguisher, and the method further comprising collecting, by the control system, vibration sensor data from the at least one vibration sensor.

In embodiments, the method further comprising removing, by the local control unit, weight measurement data samples obtained from the load cell during periods of large vibrations, thereby reducing the risk of false positives.

In embodiments, the method further comprising determining, by the remote computer unit, whether a leakage from the cylinder has occurred at least partly based on weight measurement readings which are compensated for at least both the rate of surrounding temperature variations and the vibration of the load cell during the weight measurement readings.

In embodiments, the method further comprising determining, by the remote computer unit, whether a leakage from the cylinder has occurred at least partly based on weight measurement readings which are compensated for the absolute temperature of the surrounding temperature, the rate of surrounding temperature variations and the vibration of the load cell during the weight measurement readings.

In aspects, the technology disclosed relates to a fire extinguisher comprising a cylinder for containing gas and a load cell for measuring the weight of a unit comprising the cylinder, the fire extinguisher further comprises at least one temperature sensor for detecting surrounding temperature and a local control unit configured to collect surrounding temperature data from the at least one temperature sensor and compensate the weight measurement readings obtained from the load cell at least partly based on the rate of surrounding temperature variations during the weight measurements readings.

According to aspects, the technology disclosed provides a monitoring system for remote inspection of portable fire extinguishers at one or a system of fire extinguisher stations which comprises: a load cell mounted to a fire extinguisher comprising a fire extinguisher tank defining a volume containing fire extinguishing material and disposed in communication with the volume for detection of the weight of the fire extinguishing material contained within the volume of the fire extinguisher tank. The monitoring system may further comprise a docking station mounted in the vicinity of and in communication with the fire extinguisher and an electronic circuit disposed in communication with the fire extinguisher and the docking station for issue of a wireless signal comprising weight measurement data to a remote computer unit.

The system for remote inspection may further comprises a bracket for mounting the fire extinguisher to a support and positioning the fire extinguisher relative to the docking station in an installed position for cooperative mating engagement of the male and female electrical/communication connector elements. The electronic circuit may further be adapted to issue a signal to the remote central station and, optionally, to receive a signal from the remote central station. The electronic circuit comprises an electronic signal means and the electronic circuit is adapted to issue an electronic signal. The electronic circuit comprises an electronic signal receiver for receiving an electronic signal from the remote central station source. The electronic circuit may be adapted to issue an audio signal. The electronic circuit may comprise an RF antenna and RF signal means, and the electronic circuit is adapted to issue an RF signal. The electronic circuit may optionally comprise an RF signal receiver for receiving an RF signal from the remote central station.

In embodiments, the fire extinguisher tank further defines a fire extinguisher tank outlet; the at least one portable fire extinguisher may further comprise a fire extinguisher valve assembly mounted at the fire extinguisher tank outlet; and the fire extinguisher valve assembly comprises: a fire extinguisher valve housing, a fire extinguisher valve disposed relative to the fire extinguisher tank outlet for metering release of the fire extinguishing material from the volume, and a fire extinguisher valve trigger mounted for movement of the fire extinguisher valve between a first position for containing the fire extinguishing material within the volume and a second position for metering release of the fire extinguishing material.

In embodiments, the monitoring system comprises a processing unit configured to determine the status of a plurality of gas cylinders of the respective fire extinguisher based on received weight and temperature signals. The processing unit may optionally comprise a machine learning model or deep learning model. The self-learning and adaptive machine learning technique of the processing unit use the most up to date information and knowledge about the parameters to estimate the status of the cylinder.

The fire extinguisher of the technology disclosed typically includes a fire extinguisher tank or cylinder containing a fire extinguishing material, e.g., water, dry chemical or gas, and a fire extinguisher valve assembly mounted to releasably secure a tank opening. The valve assembly may include a valve assembly body, e.g., an integral body formed of e.g. moulded plastic, a trigger mechanism for opening a valve for release of fire extinguishing material, typically through a nozzle provided to direct the released material in a desired direction, e.g., at the base of a flame. In embodiments, the valve assembly may further include a gauge to provide indication of the pressure status of fire extinguishing material within the fire extinguisher tank or cylinder. The valve assembly body, e.g., in a rear surface of the valve gauge housing, may define a female socket receiving a male connector element at the free end of the tether in cooperative, releasable engagement for electronics and/or communications connection between the docking station and the fire extinguisher(s) at each of the fire extinguisher stations. According to the technology disclosed, a monitoring system is provided for determining a status of a gas cylinder, the system comprising: a load sensor configured to detect a weight of the cylinder at predetermined time intervals; at least one temperature sensor configured to detect a temperature local to the cylinder at the predetermined time intervals; and a processing unit configured to: receive weight signals and temperature signals from the load sensor and temperature sensor respectively; and determine, based on the received weight and temperature signals, the status of the gas cylinder of each fire extinguisher; and provide an indication of the leakage status of the gas cylinder to a user. A system for managing deployed cylinders may also be provided. Methods and computer readable mediums are also provided.

In embodiments, the installer of the fire extinguisher may simply mount the extinguisher (with both gas and the agent/powder/fluid inside) before any data has been collected and before the system has made the individual mathematical model. Then the monitoring system will detect the big weight change and start the process of collecting measurement data for future compensation.

Thus, typically the measurement data is collected from the mounted system (load cell with fire ex mounted, plus temp sensor).

According to the technology disclosed, measurements are focused on the relative weight changes, and typically the absolute weight of the fire extinguisher is of less importance as the control system typically knows about any changes with high precision, but total weight with low precision.

In embodiments, at least one movement sensor, e.g. an accelerometer, is arranged at the fire extinguisher and the method comprises obtaining, by the control system and from the at least one movement sensor, movement sensor data, and removing, by the local control unit, weight measurement data samples obtained from the load cell during periods of large movements of the fire extinguisher before transmitting weight measurement data samples to a remote computer unit, thereby reducing the risk of false positives. In embodiments, the method further comprises determining, by the remote computer unit, whether leakage from the cylinder has occurred at least partly based on weight measurement readings which are compensated/adjusted for at least both the rate of surrounding temperature variations and the movements of the load cell during the weight measurement readings.

In embodiments, the method further comprises determining, by the remote computer unit, whether a leakage from the cylinder has occurred at least partly based on weight measurement readings which are compensated for the absolute temperature of the surrounding temperature, the rate of surrounding temperature variations, the vibration of the load cell during the weight measurement readings and the movements of the fire extinguisher determined by the movement sensor data obtained from the movement sensor, e.g. accelerometer.

In embodiments, the technology disclosed relates to a method for detecting very small gas leakage from a fire extinguisher comprising a gas cylinder, a load cell for weight measurements and a temperature sensor for detecting surrounding temperature, the method comprising:
collecting a range of measurement data from both the load cell and the temperature sensor, wherein the measurement data includes load cell readings and surrounding temperature readings measured over a certain period of time; determining, based on the range of measurements data collected from the load cell and the temperature sensor, the variations in weight along with the variations of surrounding temperature; determining a model for how the rate of surrounding temperature variations affects the readings from the individual load cell; measuring, by use of the load cell, the weight of at least one of the fire extinguisher and the gas cylinder;
measuring, by use of the temperature sensor, data indicating the rate of surrounding temperature variations for the time period for measuring said weight;
compensating for the rate of surrounding temperature variations during said weight measurements by using the model for how the rate of surrounding temperature variations affects the readings from the individual load cell, thereby reducing the influence of the rate of surrounding temperature variations on the load cell readings; and
determining, based on the compensated weight measurement data, whether a leakage of gas from the fire extinguisher has occurred.

Organizations which own, control or manage multiple sites such as businesses, property management groups, or government entities, are faced with a management and communication problem in that such remote and dispersed sites often include one or more continuously and independently operating fire alarm systems, security systems, building control systems or the like to monitor some or all of the regions of the respective properties.

In embodiments, the technology disclosed aims to detect periods with non-normal vibration and with large variances in temperature to get a compensated weight value, but perhaps more importantly, to reduce the risk of false positives. The cloud may simply "cut out the invalid data" when we have these measurements. The technology disclosed thereby enables a solution to make the monitoring system more and more "clever" over time without changing the physical sensors. As more and more data is collected, the control system will improve its anomaly detection, e.g. by use of machine learning and artificial intelligence, thereby avoiding more false positives when determining whether leakage has occurred. Benefits of the technology disclosed when false positives are avoided is that service cars are not sent to wrong locations to manually inspect fire extinguishers.

According to embodiments and typically already when the weight sensor is mounted, the sensors typically begin collecting data and transmitting data to the cloud. Based on each sensor's individually collected data, the cloud algorithm may use regression mathematics and determination of coefficients for each sensor. The sensor then "knows" that the weight should not change in the period after mounting it, and is therefore able to learn the transfer function/coefficients.

In embodiments, temperature and weight changes may be aggregated as a single standard variation value. The temperature change compensations for individual sensors are typically the most important aspects to reduce the risk of false positives when detecting below 25 grams. However, vibration compensations may also be an important aspect to avoid false positives, Important aspects of the technology disclosed in avoiding or reducing the risk of false positives when determining whether leakage has occurred is the local filtering of data and the distribution of work/data processing between the weight sensor (and/or local control unit) and the cloud. The individual sensor(s) (and/or local control unit) knows what, and how fast measures changes, while the cloud can put it all together to compensate and get smarter over time to sort out the anomalies (data to "cut out"), e.g. by using data from an entire fleet of sensors and installations of fire extinguishers. An individual sensor would never have had the same opportunity to learn from other sensors without being reprogrammed or replaced, which is a further advantage of having the cloud, or remote computer unit, in the equation.

In embodiments, the technology disclosed relates to a monitoring system comprising an IOT interface device with software including a plurality of sensors to communicate with components and a wireless gateway being connected to an electronic communications network and a remotely located computer server, or computer unit, thereby the data, e.g. measurement data, are transmitted through the wireless gateway to the computer server, or computer unit, of the monitoring system.

In embodiments, the data may be processed and transformed to generate critical information that may be used by the remotely located computer unit, or computer server, for determining whether a leakage from the cylinder of a fire extinguisher has occurred.

In embodiments, the control system of the monitoring system may comprise a local control unit arranged at the site of the respective fire extinguisher. The local control unit may be configured to filter and/or pre-process measurement data obtained from the load cell, or weight sensor, and the at least one temperature sensor for measuring surrounding temperature and temperature variations. The local control unit may then be configured to at least one of discarding obtained measurement data samples and applying weighting factors to the obtained measurement data before transmitting the measurement data to the remotely located computer unit, and/or computer server. In embodiments, the local control unit may be configured to discard measurement data obtained during periods of relatively large temperature variations and/or the remote computer unit is configured to apply weighting factors to the obtained weight measurement data where the values of the applied weighting factors are dependent on the rate of temperature variations during the weight measurement readings. The remotely located computer unit, and/or computer server, may then be configured to (further) process the data received from the local control unit and/or determine whether leakage from a cylinder of the fire extinguisher has occurred at least partly based on filtered and/or pre-processed measurement data received from the local control unit. The filtered and/or pre-processed measurement data on which the determining of whether leakage has occurred is at least partly based may then include weight measurement data compensated for the rate of temperature variations during the weight measurement readings.

In embodiments, at least one of the load cell, or weight sensor, and the at least one temperature sensor for measuring surrounding temperature and temperature variations which are arranged at the respective fire extinguisher may themselves be configured to filter and/or pre-process their respective measurement data before the data is transmitted to the remotely located computer unit, and/or computer server, via the wireless gateway connected to the electronic communications network. In embodiments, the load cell may be configured to discard measurement data obtained during periods of relatively large temperature variations and/or the remote computer unit may be configured to apply weighting factors to the obtained weight measurement data where the values of the applied weighting factors are dependent on the rate of temperature variations during the weight measurement readings. The remotely located computer unit, and/or computer server, may then be configured to (further) process the data received from the local control unit and/or determine whether leakage from a cylinder of the fire extinguisher has occurred at least partly based on measurement data filtered and/or pre-processed by the load cell and/or at least one temperature sensor for measuring surrounding temperature. The filtered and/or pre-processed measurement data on which the determining of whether leakage has occurred is at least partly based may then include weight measurement data compensated for the rate of temperature variations during the weight measurement readings.

In embodiments, the technology disclosed relates to a method of monitoring a fire extinguisher comprising the steps of: initializing a load cell equipped to the fire extinguisher and recording load cell data with temperature as a reference; scheduling a collection of data; comparing the collected data in step with the reference data of step with a temperature compensation including a compensation for the rate of surrounding temperature variations; determining whether a leakage has occurred based on the collected and compensated weight measurement data; and alerting for a remedial action by sending a signal to a control centre for further action and/or to a mobile communications device associated with the fire extinguisher.

In embodiments, it is desirable that all the critical disadvantages presently faced by at least one fire extinguisher in a building be overcome by a monitoring system which integrates the operations of all devices and equipment, monitor the statuses of these devices and equipment, monitor the surroundings and communicate sudden changes detected by each safety device or equipment to a control centre for further action.

In embodiments, the technology disclosed provides for an improved internet facilitated monitoring system which continuously monitor the operational status of a plurality of fire extinguishers and pro-actively report any small leakage from any of the fire extinguishers in the group immediately.

The technology disclosed allows for existing fire safety management to organise, arrange and integrate a variety of stand-alone fire safety hardware devices and equipment into an effective network of smart fire safety devices and equipment, capable of providing feedback on operational statuses and conditions in surroundings and in real time.

## Claims

1. A monitoring system for detecting leakage from a fire extinguisher comprising a gas cylinder for containing gas and a load cell for measuring the weight of a unit comprising the cylinder, the monitoring system further comprises at least one temperature sensor for detecting surrounding temperature and a control system configured to collect surrounding temperature data from the at least one temperature sensor and compensate the weight measurement readings obtained from the load cell at least partly based on the rate of surrounding temperature variations during the weight measurements readings.

2. The monitoring system according to claim 1, wherein the control system is further configured to determine whether a leakage from the cylinder has occurred at least partly based on the compensated weight measurement readings.

3. The monitoring system according to any of claims 1 and 2, wherein the control system is configured to compensate the weight measurement readings obtained from the individual load cell based on both how the absolute surrounding temperature and the rate of surrounding temperature variations collected from the at least one temperature sensor affect the readings from the individual load cell.

4. The monitoring system according to any of claims 1 to 3, wherein the control system is configured to compensate the weight measurement readings obtained from the individual load cell based on the rate of surrounding temperature variations so that when the load cell is exposed to fast temperature changes the control system will return another weight measurement value than when the load cell is exposed to slow temperature changes even when the weight was sampled at the exact same absolute surrounding temperature.

5. The monitoring system according to any of claims 1 to 4, wherein the control system is configured to obtain input data, a function and/or a model which determines how both surrounding temperature and the rate of surrounding temperature variations affect weight measurement readings from the individual load cell, and then filter and/or compensate weight measurement readings obtained from the individual load cell based on the obtained input data, function and/or model.

6. The monitoring system according to any of claims 1 to 4, wherein the control system is configured to collect measurement data from both the individual load cell and the at least one temperature sensor during the same, or substantially the same, time period and then adjust weight measurements obtained from the individual load cell at least based on the collected measurement data indicative of how the rate of surrounding temperature variations affects the weight measurement readings from the individual load cell.

7. The monitoring system according to claim 6, wherein the control system is configured to collect, over a certain first time period, a range of measurement data from both the load cell and the temperature sensor and then determine, based on the collected range of measurement data, a model for compensating for further measurements obtained from the individual load cell where the model includes compensations for how the rate of surrounding temperature variations affects the weight measurement readings from the individual load cell.

8. The monitoring system according to claim 7, wherein the control system is configured to obtain further measurement readings from the load cell and the temperature sensor and compensate the further weight measurement readings from the individual load cell using the determined model for the individual load cell.

9. The monitoring system according to any of the preceding claims, wherein the control system is further configured to determine, based on the compensated weight measurement readings, whether a leakage from the gas cylinder has occurred.

10. The monitoring system according to any of claims 1-8, wherein the control system comprises a local control unit located at the site of the fire extinguisher and which is configured to transmit, to a remote computer unit for further processing, data including temperature-compensated weight measurement readings obtained from the individual load cell, wherein the temperature-compensated weight measurement readings include adjustments for how the rate of surrounding temperature variations affects the readings from the individual load cell.

11. The monitoring system according to claim 10, wherein the remote computer unit is configured to determine, based on the compensated weight measurement readings, whether a leakage from the gas cylinder has occurred.

12. The monitoring system according to any of claims 10 and 11, wherein the local control unit is further configured to remove or discard weight measurement data samples obtained from the load cell during periods of relatively large variances of surrounding temperature before transmitting the data including the compensated weight measurement readings to the remote computer unit for further processing.

13. The monitoring system according to any of claims 10 to 12, wherein the local control unit is further configured to reduce the risk of false positives by filtering weight measurement data obtained during periods of relatively large variances of surrounding temperature before transmitting the weight measurement data to the remote computer unit for further processing.

14. The monitoring system according to any of claims 10 to 13, wherein the local control unit is further configured to aggregate weight measurement data samples obtained from the load cell before transmitting the weight measurement data to the remote computer unit for further processing.

15. The monitoring system according to claim 14, wherein the local control unit is further configured to continuously adjust the aggregation of weight measurement data samples at least partly based on a determination of how the rate of surrounding temperature variations affects the readings from the individual load cell.

16. The monitoring system according to any of claims 10 to 15, wherein the local control unit is further configured to continuously adjust the frequency of transmission of weight measurement data samples to the remote computer unit based on a determination of how the rate of surrounding temperature variations affects the readings from the individual load cell, thereby reducing the risk of false positives and/or saving battery.

17. The monitoring system according to any of claims 10 to 16, wherein the local control unit is further configured to apply weighting factors to weight measurement data samples so that samples that were obtained from the load cell during periods of relatively smaller changes of surrounding temperature are given a greater importance for the determining whether leakage from the cylinder has occurred than samples obtained during periods of relatively larger variances of surrounding temperature.

18. The monitoring system according to any of claims 10 to 16, wherein the remote computer unit is further configured to apply weighting factors to weight measurement data samples received from the local control unit so that samples that were obtained by the load cell during periods of relatively small variances of surrounding temperature are given a greater importance when determining whether leakage from the cylinder has occurred than samples obtained during periods of relatively large variances of surrounding temperature.

19. The monitoring system according to any of the preceding claims, wherein the control system is configured to at least one of filter and compensate weight measurement data based on vibration sensor data which is at least one of obtained by the control system from a separate vibration sensor and derived by control system from the weight measurement reading, and wherein the control system is further configured to determine whether a leakage from the cylinder has occurred at least partly based on the vibration filtered or compensated weight measurement data.

20. A method for detecting leakage from a fire extinguisher comprising a cylinder for containing gas and a monitoring system comprising a load cell for determining the weight of a unit comprising the cylinder, at least one temperature sensor for detecting surrounding temperature and a control system, the method comprising the steps of:
a) obtaining, by the control system, surrounding temperature data from the at least one temperature sensor and weight measurement data from the load cell; and
b) compensating, by the control system, weight measurement readings from the load cell at least partly based on the rate of surrounding temperature variations.

21. The method according to claim 20, the method further comprising determining, by the control system, e.g. a remote computer unit, whether a leakage from the cylinder has occurred based at least partly on the compensated weight measurement readings.

22. The method according to any of claims 20 and 21, the method comprising filtering, by the control system, the obtained weight measurement data based on the obtained surrounding temperature data by at least one discarding weight measurement data samples obtained during periods of relatively large variances of surrounding temperature and applying weighting factors to the weight measurement data samples so that data samples obtained during periods of small variances of surrounding temperature are given a greater importance for determining whether leakage from the cylinder has occurred than data samples obtained during periods of large variances of surrounding temperature.

23. The method according to any of claims 20 to 22, the method further comprising compensating, by the control system, the weight measurement readings obtained from the individual load cell based at least partly on both how the absolute surrounding temperature and the rate of surrounding temperature variations obtained from the at least one temperature sensor affect the weight measurement readings from the individual load cell.

24. The method according to any of claims 20 to 23, the method comprising collecting, by the control system, a range of measurement data from both the load cell and the at least one temperature sensor during the same, or substantially the same, time period and adjusting weight measurement readings from the individual load cell based on the collected range of measurement data.

25. The method according to any of claims 20 to 24, the method comprising collecting, over a certain first time period, a range of measurement data from both the load cell and the temperature sensor and determining, based on the collected range of measurement data, a model, function and/or algorithm for compensating for further weight measurements readings obtained from the individual load cell including compensations for both how the absolute surrounding temperature and the rate of surrounding temperature variations affect the weight measurement readings from the individual load cell.

26. The method according to any of claims 20 to 25, the method further comprising applying, by the local control unit of the fire extinguisher, weighting factors to weight measurement data samples so that samples that were obtained from the load cell during periods of small variances of surrounding temperature are given a greater importance for the determining whether leakage from the cylinder has occurred than samples obtained during periods of large variances of surrounding temperature.

27. The method according to any of claims 20 to 26, the method further comprising determining, by a remote computer unit, whether a leakage from the cylinder has occurred at least partly based on weight measurement readings which are compensated for at least both the rate of surrounding temperature variations and the vibration of the load cell during the weight measurement readings.

28. The method according to any of claims 20 to 27, the method further comprising determining, by a remote computer unit, whether a leakage from the cylinder has occurred at least partly based on weight measurement readings which are first filtered by a local control unit and then compensated for by a remotely located computer unit, wherein the compensations includes at least both the rate of surrounding temperature variations and the vibration of the load cell during the weight measurement readings.

29. The method according to any of claims 20 to 28, the method further comprising determining, by a remote computer unit, whether a leakage from the cylinder has occurred at least partly based on weight measurement readings which are compensated for the absolute temperature of the surrounding temperature, the rate of surrounding temperature variations and the vibration of the load cell during the weight measurement readings.

30. The method according to any of claims 20 to 29, the method further comprising determining, by a remote computer unit, whether a leakage from the cylinder has occurred at least partly based on weight measurement readings which are first filtered by a local control unit and then compensated for by a remotely located computer unit, wherein the compensations includes compensations for at least the absolute temperature of the surrounding temperature, the rate of surrounding temperature variations and the vibration of the load cell during the weight measurement readings.

31. A fire extinguisher comprising a cylinder for containing gas and a load cell for measuring the weight of a unit comprising the cylinder, the fire extinguisher further comprises at least one temperature sensor for detecting surrounding temperature and a local control unit configured to collect surrounding temperature data from the at least one temperature sensor and compensate the weight measurement readings obtained from the load cell at least partly based on the rate of surrounding temperature variations during the weight measurements readings.
